(19) Europäisches Patentamt
European Patent Office
Office européen des brevets

(11) Veröffentlichungsnummer: **0 083 698**
**B1**

(12) # EUROPÄISCHE PATENTSCHRIFT

(45) Veröffentlichungstag der Patentschrift: **15.01.86**

(51) Int. Cl.⁴: **C 08 G 2/10**, C 08 G 2/38

(21) Anmeldenummer: **82109857.1**

(22) Anmeldetag: **26.10.82**

(54) **Verfahren zur kontinuierlichen (Co)polymerisation von Trioxan.**

(30) Priorität: **12.12.81 DE 3149321**

(43) Veröffentlichungstag der Anmeldung: **20.07.83 Patentblatt 83/29**

(45) Bekanntmachung des Hinweises auf die Patenterteilung: **15.01.86 Patentblatt 86/3**

(84) Benannte Vertragsstaaten: **BE FR GB IT NL SE**

(56) Entgegenhaltungen:
**DE-B-1 161 421**
**DE-B-1 495 228**
**GB-A-982 718**
**GB-A-1 077 759**

(73) Patentinhaber: **Degussa Aktiengesellschaft, Weissfrauenstrasse 9, D-6000 Frankfurt am Main 1 (DE)**

(72) Erfinder: **Amann, Herbert, Dr. Dipl.- Chem., Greifenhagenstrasse 17, D-6450 Hanau 9 (DE)**
Erfinder: **Morlock, Gerhard, Dr. Dipl.- Chem., Wildaustrasse 3, D-6450 Hanau 9 (DE)**

**EP 0 083 698 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

**Beschreibung**

Gegenstand der Erfindung ist ein Verfahren zur kontinuierlichen Polymerisation von Trioxan für sich alleine oder zusammen mit Trioxan copolymerisierbaren Verbindungen in Gegenwart eines kationisch wirksamen Katalysators.

Es ist bereits eine Vielzahl derartiger Verfahren bekannt, die sich in vier Gruppen zusammenfassen lassen:

1. Ein schmelzflüssiges Ausgangsmaterial wird im Ruhezustand, das heißt ohne Beeinflussung durch Rühren oder Kneten polymerisiert. Solche Verfahren sind beispielsweise in DE-PS 1 137 215, DE-AS 1 225 389, DE-AS 1 244 408, DE-AS 1 720 300, oder in DE-PS 2 003 270 beschrieben. Bei diesen Verfahren fällt das Polymerisat in einer Form an, die eine nachträgliche Zerkleinerung erforderlich macht, z. B. in dünnen platten oder in dickeren Blöcken.

2. Ein schmelzflüssiges Ausgangsmaterial wird in mit Mischorganen versehenen selbstreinigenden Maschinen polymerisiert, wobei es unter allmählicher Verfestigung zunächst in einen breiartigen Zustand übergeht und anschließend durch die Mischorgane zu einem trockenen, körnigen Polymerisat zerteilt witd. Solche Verfahren sind beispielsweise in DE-AS 1 161 421, DE-AS 1 454 774, DE-AS 1 495 228, DE-AS 1 720 358, DE-OS 2 543 790, DE-OS 2 753 218, DE-OS 3 018 898 oder DE-OS 3 040 049 beschrieben. Sie erfordern den Einsatz sehr spezieller und aufwendiger Maschinen.

3. Ein schmelzflüssiges Ausgangsmaterial wird homogen mit dem Katalysator vermischt, durch schnelles Abkühlen verfestigt und in festem Zustand polymerisiert. Solche Verfahren sind beispielsweise in DE-OS 2 362 172 oder DE-OS 2 362 791 beschrieben. Sie erfordern ebenfalls den Einsatz relativ aufwendiger Maschinen.

4. Das Ausgangsmaterial wird in bzw. aus der Dampfphase polymerisiert. Ein solches Verfahren ist beispielsweise in DE-PS 1 137 215 beschrieben. Bei diesem Verfahren passiert jedoch ein Großteil des eingesetzten Ausgangsmaterials unverändert den Reaktor.

Das erfindungsgemäße Verfahren ist nun dadurch gekennzeichnet, daß man das zu polymerisierende Ausgangsmaterial in flüssiger Form kontinuierlich in einen als Reaktor dienenden Mischer einspeist, in welchem bei einer oberhalb der kritischen Drehzahl liegenden Drehzahl pulverförmiges bis körniges Oxymethyien-(Co)polymerisat zu einem stabilen Wirbelbett verwirbelt wird, die Einspeisungsgeschwindigkeit des zu polymerisierenden Ausgangsmaterials so einstellt daß pro Minute 0,5 bis 10 Gewichtsprozent, bezogen auf den gesamten Reaktorinhalt, zugeführt werden, die Katalysatorkonzentretion so wählt, daß eine Verfestigung des flüssigen Ausgangsmaterials innerhalb von 20 bis 50 Sekunden nach der Katalysatorzugabe eintritt, die Temperatur des Reaktorinhalts im Bereich zwischen 60 und 125°C hält und nach einem polymerisationsumsatz von mindestens 70 Prozent kontinuierlich oder taktweise Polymerisat aus dem Reaktor austrägt.

Als Ausgangsmaterial für das erfindungsgemäße Verfahren dient entweder geschmolzenes Trioxan für sich alleine oder ein schmelzflüssiges Gemisch aus Trioxan und mindestens einer mit Trioxan copolymerisierbaren Verbindung. Beispiele für solche Verbindungen sind cyclische Ether mit 3 bis 5, vorzugsweise 3 Ringgliedern; von Trioxan verschiedene cyclische Acetale, insbesondere Formale, mit 5 bis 11, vorzugsweise 5 bis 8 Ringgliedern; oder lineare Polyacetale, insbesondere Polyformale. Diese Verbindungen werden jeweils in einer Menge zwischen 0,01 und 20, vorzugsweise zwischen 0,1 und 10, insbesondere zwischen und 5 Gewichtsprozent, bezogen auf das Gewicht des Trioxans, eingesetzt.

Als mit Trioxan copolymerisierbare Verbindungen sind insbesondere Verbindungen der Formel

$$\underline{CH_2 - (CHR)_x - [O - (CH_2)_z]_y - O}$$

geeignet, in der R ein Wasserstoffatom, einen Alkylrest mit 1 bis 6, vorzugsweise 1, 2 oder 3 Kohlenstoffatomen, der mit 1, 2 oder 3 Halogenatomen, vorzugsweise Chloratomen, substituiert sein kann, einen Alkoxymethylrest mit 2 bis 6, vorzugsweise 2, 3 oder 4 Kohlenstoffatomen, einen Phenylrest oder einen Phenoxymethylrest bedeutet, x eine ganze Zahl von 1 bis 3, wobei y gleich Null ist, y eine ganze Zahal von 1 bis 3, wobei x gleich Null und z gleich 2 ist, und z eine ganze Zahl von 3 bis 6, vorzugsweise 3 oder 4 darstellt, wobei x gleich Null und y gleich 1 ist.

Als cyclische Ether eignen sich vor allem Epoxide, z.B. Ethylenoxid, Styroloxid, Propylenoxid und Epichlorhydrin, sowie Glycidyläther von ein- oder mehrwertigen Alkoholen oder Phenolen.

Als cyclische Acetale eignen sich vor allem cyclische Formale von aliphatischen oder cycloaliphatischen α, ω-Diolen mit 2 bis 8, vorzugsweise 2, 3 oder 4 Kohlenstoffatomen, deren Kohlenstoffkette in Abständen von 2 Kohlenstoffatomen durch ein Sauerstoffatom unterbrochen sein kann, z.B. Glykolformal (1,3-Dioxolan), Propandiolformal (1,3-Dioxan), Butandiolformal (1,3-Dioxepan) und Diglykolformal (1,3,6-Trioxocan), sowie 4-Chlormethyl-1.3-dioxolan und Butendiolformal (1,3-Dioxacyclohepten-(5)). Geeignet sind aber auch, insbesondere für die Herstellung von Terpolymeren des Trioxans, Diformale, z.B. Diglycerindiformal.

Als lineare Polyacetale eignen sich sowohl Homo- oder Copolymere der vorstehend definierten cyclischen

Acetale als auch lineare Kondensate aus aliphatischen oder cycloaliphatischen α, ω-Diolen mit aliphatischen Aldehyden oder Thioaldehyden, vorzugsweise Formaldehyd. Insbesondere werden Homopolymere cyclischer Formale von aliphatischen α, ω-Dioien mit 2 bis 8, vorzugsweise 2, 3 oder 4 Kohlenstoffatomen verwendet, z.B. Poly(1,3-dioxolan), Poly(1,3-dioxan) und Poly(1,3-dioxepan).

Das schmelzflüssige Ausgangsmaterial kann auch bereits geringe Mengen weiterer Zusatzstoffe, wie Molekulargewichtsregler, Stabilisatoren, Gleitmittel oder Lösungsmittel enthalten.

Als Molekulargewichtsregler können alle Substanzen verwendet werden, von denen bekannt ist, daß sie bei der Trioxanpolymerisation als Kettenüberträger wirken. Bevorzugte Molekulargewichtsregler sind lineare Formale wie beispielsweise Dimethylformal oder Dibutylformal und Dialkylether von Oligooxymethylenen, beispielsweise Dioxymethylendimethylether. Die Molekulargewichtsregler können nicht nur zur Einstellung des gewünschten Molekulargewichts, sondern auch zur Herstellung von Polyoxymethylenen mit funktionellen Endgruppen oder Oxymethylen-Blockcopolymeren benutzt werden. Als Beispiele hierfür seien genannt: Diole und Polyole, Carbonsäureanhydride, Formale von Halogenalkoholen, ungesättigten Alkoholen und Hydroxyestern.

Dem schmelzflüssigen Ausgangsmaterial können darüber hinaus auch, feinverteilte feste Stoffe zugesetzt werden, sofern sie dessen Polymerisation nicht übermäßig inhibieren. Als Beispiele seien genannt Metalle, Metalloxide oder -sulfide, Pigmentfarbstoffe oder inerte organische Polymere.

Der die Polymerisation auslösende kationisch wirksame Katalysator wird vorzugsweise auch bereits dem schmelzflüssigen Ausgangsmaterial zugesetzt. Alternativ kann er aber auch gleichzeitig mit diesem in Form einer Lösung kontinuierlich direkt in den Reaktor zudosiert werden.

Geeignete Katalysatoren sind z.B. in "Kunststoff-Handbuch" Band XI, Seite 12, Carl Hanser Verlag, München 1971, beschrieben. Besonders geeignet sind die nachfolgend aufgeführten Substanzen: Bortrifluorid, Phosphor-, Arsen- und Antimonpentafluorid, sowie deren Komplexverbindungen, wie Bortrifluoriddiethyletherat, Triphenylmethylhexafluorophosphat, Trimethyloxoniumhexafluoroarsenat und Acetylhexafluoroantimonat; Perchlorsäure und Perchlorsäureverbindungen, wie t-Butylperchlorat und Acetylperchlorat. Die Katalysatoren werden je nach ihrer Wirksamkeit und je nach Art und Reinheit der Ausgangsstoffe in einer Gewichtsmenge von 0,1 bis 1000 ppm, bezogen auf das Gesamtgewicht der zu polymerisierenden Verbindungen, eingesetzt. Bei Bortrifluorid liegt der übliche Einsatzbereich etwa zwischen 10 und 100 ppm, bei Perchlorsäure etwa zwischen 0,1 und 10 ppm.

Das zu polymerisierende Ausgangsmaterial wird in flüssiger Form kontinuierlich in einen als Reakton dienenden Mischer eingespeist, in welchem bei einer oberhalb der kritischen Drehzahl liegenden Drehzahl ein vorgelegtes pulverförmiges bis körniges Oxymethylen-(Co)polymerisat zu einem stabilen Wirbelbett verwirbelt wird. Als Reaktor eignen sich grundsätzlich alle Mischer, in welchen die Polymerisatteilchen mechanisch verwirbelt, rasch mit dem flüssigen Ausgangsmaterial vermischt und durch ausreichende Dispergierkräfte am Zusammenbacken gehindert werden. Diese Forderungen werden beispielsweise von bestimmten Mischern mit rotierenden Mischwerkzeugen erfüllt, die man üblicherweise zum Mischen von Feststoffen mit Flüssigkeiten oder Pasten verwendet, soweit sie mit einer oberhalb der kritischen Drehzahl liegenden Drehzahl betrieben werden können. wie Wurf- oder Intensivmischern (vgl. H. Kraft: "Feststoffmischer", Verfahrenstechnik 3 (1969), Seiten 344 bis 352).

Bei der kritischen Drehzahl $n_k$ ist die Zentrifugalkraft gerade so groß wie die Schwerkraft:

$$n_k = \frac{1}{2\pi}\sqrt{\frac{g}{R}}$$

Es bedeuten $n_k$ die kritische Drehzahl in Umdrehungen pro Sekunde, g die Erdbeschleunigung und R den größten Radius des Mischwerkzeugs. Nach Überschreiten der kritischen Drehzahl werden die zu mischenden Teilchen in eine Wurfbahn beschleunigt. Mit weiter steigender Drehzahl wird dann das Mischgut zunehmend aufgelockert und fluidisiert, so daß es den Charakter eines Wirbelbettes annimmt. Die beim erfindungsgemäßen Verfahren anzuwendenden Drehzahlen liegen daher in jedem Fall oberhalb der kritischen Drehzahl, vorzugsweise oberhalb des 1,8-fachen Wertes den kritischen Drehzahl.

Bei den Wurfmischenn unterscheidet man je nach Art und Anzahl den Mischwerkzeuge beispielsweise zwischen Paddel-, Schaufel- und Pflugscharmischern, sowie zwischen Ein- und Mehrwellenmischern. Sie werden meist mit horizontal laufenden Welle betrieben. Es hängt von der Form und Anordnung der Mischwerkzeuge ab, ob von wiegend Radial- oder Achsialmischung stattfindet. Eine starke Bevorzugung der Radialmischung begünstigt die "Pfropfenströmung" bzw. ein enges Verweilzeitspektrum. Es ist günstig, wenn der Mischer eine zylindnische Form hat und wenn die Mischwerkzeuge einen möglichst großen Teil den Wandungen mit nur geringem Spiel überstreichen. Dadurch können die Wandungen von Ablagerungen frei gehalten werden.

Die Intensivmischer werden meist mit vertikal laufender Welle betrieben. Ihre Mischwerkzeuge rotieren im allgemeinen nur im unteren Teil des zylindrischen Mischraumes. Die Wandungen werden im unteren Teil durch die mit großer Energie aufprallenden Teilchen des Mischgutes, im oberen Teil durch einen langsam rotierenden Schaber von Ablagerungen freigehalten.

Eine "Überfeuchtung" des Wirbelbetts ist zu vermeiden, da sie die Beweglichkeit der Polymerisatteilchen infolge der Adhäsionskräfte herabsetzt, Klumpenbildung hervorruft, Polymerisatanbackungen an den Wandungen und Mischwerkzeugen verursacht, die Ableitung der polymerisationswärme verschlechtert und schließlich zum Zusammenbruch des Wirbelbetts führt. Es ist deshalb erforderlich, die Einspeisungsgeschwindigkeit des zu polymerisierenden Ausgangsmaterials und die Polymerisationsgeschwindigkeit, sowie den gesamten Reaktoninhalt aufeinander abzustimmen.

Insbesondere muß die Einspeisungsgeschwindigkeit so eingestellt werden, daß pro Minute 0,5 bis 10, vorzugsweise 1 bis 5 Gewichtsprozent. bezogen auf den gesamten Reaktorinhalt, zugeführt werden. Ferner muß die Katalysatorkonzentration so gewählt werden, daß eine Verfestigung des flüssigen Ausgangsmaterials innerhalb von 20 bis 50 Sekunden nach den Katalysatorzugabe eintritt. Dann wird im allgemeinen ein Polymerisationsumsatz von etwa 85 bis 95 % innerhalb weniger Minuten erreicht. Da die Polymerisationsgeschwindigkeit außer von der Art und Konzentration des Katalysators vor allem auch von der Temperatur abhängt, muß schließlich die Temperatur des Reaktorinhalts im Bereich zwischen 60 und 125°C gehalten werden.

Mit zunehmender Katalysatorkonzentration steigt einerseits die Polymerisationsgeschwindigkeit an, andererseits verringert sich aber die Induktionszeit, das ist die Zeit von der Katalysatorzugabe bis zur beginnenden Verfestigung des flüssigen Ausgangsmaterials. Wenn die Katalysatorzugabe bereits außerhalb des Reaktors erfolgt, wird man, um eine vorzeitige Polymerisation in den Zuleitungen zu vermeiden, Induktionszeiten von etwa 3 bis 5 Sekunden kaum wesentlich unterschreiten können und infolgedessen die Katalysatorkonzentration entsprechend bemessen müssen. Die Temperatur des eingespeisten flüssigen Ausgangsmaterials kann zwischen 60 und 110°C liegen. Man wird aber zweckmäßigerweise im unteren Bereich bei etwa 65 bis 75°C bleiben, weil dann bei gleicher Induktionszeit eine höhere Katalysatorkonzentration angewandt und dadurch eine schnellere Polymerisation erzielt werden kann.

Durch die Steuerung den Temperatun des Reaktorinhalts mittels den Temperatur des Reaktormantels hat man eine weitere Möglichkeit, die Polymerisationsgeschwindigkeit zu beeinflussen. Um eine möglichst gute Raum-Zeit-Ausbeute zu erzielen wird man im allgemeinen eine Innentemperatur oberhalb von 75°C bevorzugen Bei Innentemperaturen von mehr als 100°C empfiehlt sich die Anwendung eines leichten Überdrucks, um das Verdampfen von flüchtigen Monomeren zu verhindern. Vorzugsweise wird die Temperatur des Reaktionsinhalts zwischen 75 und 100°C gehalten.

Die Polymerisation im Wirbelbett ermöglicht eine sehr wirksame Abführung der Polymerisationswärme über den Reaktormantel mit einem flüssigen Wärmeübertragungsmittel. Je nach Bauart des verwendeten Mischers kann es vorteilhaft sein, den Reaktormantel in mehrere Zonen zu unterteilen, um so das Temperaturprofil in Fließrichtung nach Wunsch beeinflussen zu können. Es ist dann beispielsweise möglich, die Temperatur des Reaktorinhalts im Austragsteil zu senken oder die Wärmeabfuhr in dem Bereich zu verstärken, wo die Hauptmenge der Polymerisationswärme frei wird.

Nach einem Polymerisationsumsatz von mindestens 70 % wird kontinuierlich oder taktweise Polymerisat aus dem Reaktor ausgetragen. Hierbei hält man den Füllstand des Reaktors vorzugsweise im Bereich von etwa 30 bis 70 % des Reaktorvolumens. Wird die Polymerisation in nur einer Stufe vorgenommen, wird man natürlich Polymerisationsumsätze von mehr als 70 %, insbesondere nahe an 100 % anstreben. Es ist aber auch möglich, die Polymerisation in zwei Stufen durchzuführen. Beispielsweise kann man einen Intensivmischer für den ersten Teil der Polymerisation und einen Wurfmischen fün die Nachpolymenisation benutzen. wenn den Polymerisationsumsatz in den ensten Polymerisationsstufe mindestens etwa 70 bis 80 % erreicht hat, kann man aber für die Nachpolymerisation auch Schubmischer (vgl. H. Kraft: "Feststoffmischer", Verfahrenstechnik 3 (1969), Seiten 344 bis 352) einsetzen, die mit einer unterhalb der kritischen Drehzahl liegenden Drehzahl betrieben werden.

Ein taktweiser Austrag des Polymerisats empfiehlt sich bei Verwendung von Wurfmischern mit stark bevorzugter Achsialmischung und von Intensivmischern. Bei Verwendung von Wurfmischern mit bevorzugter Radialmischung ist dagegen ein kontinuierlicher Austrag des Polymerisats im allgemeinen vorteilhafter.

In einem Intensivmischer wird das eingespeiste flüssige Ausgangsmaterial sehr schnell über den ganzen Reaktorinhalt verteilt. Dieser hat daher überall annähernd die gleiche Zusammensetzung. Die Einspeisungsgeschwindigkeit kann infolgedessen vorteilhafterweise so eingestellt werden, daß sie im oberen Teil des oben genannten Bereichs liegt und pro Minute 1,5 bis 10, vorzugsweise 2 bis 5 Gewichtsprozent, bezogen auf den gesamten Reaktoninhalt, beträgt.

Anders sind die Verhältnisse im Wunfmischer, wenn dieser in einer mehr oder weniger angenäherten "Pfropfenströmung" durchwandent wird. Hier ist es vorteilhafter eine Einspeisungsgeschwindigkeit näher der unteren Grenze des oben genannten Bereichs zu wählen und pro Minute 0,5 bis 5, vorzugsweise 1 bis 3 Gewichtsprozent, an flüssigem Ausgangsmaterial zuzuführen.

Eine Mittelstellung zwischen den Intensivmischern und Wurfmischern nehmen Vorrichtungen ein, die aus zwei miteinander verbundenen, in entgegengesetzter Richtung fördernden Wunfmischern bestehen. In ihnen wird der Reaktorinhalt im Kreis gefördert, das flüssige Ausgangsmaterial wind in den ersten Mischer eingespeist, ein Teil des Polymerisats wird am Ende des zweiten Mischers ausgetragen, der Rest aber in den ersten Mischen zurückgeführt.

Eine schnelle Durchmischung des Reaktorinhalts in einem Wurfmischer wird dadurch begünstigt, daß man das flüssige Ausgangsmaterial gleichzeitig an mehreren Stellen einspeist und/oder bereits in feinverteilter Form, beispielsweise mittels einer Sprühdüse, zugibt. Außerdem kann die Turbulenz im Wirbelbett durch

schnellaufende Zahnscheiben oder Messersterne im Zulaufbereich verstärkt werden.

Vorzugsweise werden das Trioxan und gegebenenfalls mindestens eine mit Trioxan copolymerisierbare Verbindung und mindestens ein Molekulargewichtsregler und der Polymerisationskatalysator vor der Einspeisung in den Reaktor vermischt. Eine zweckmäßige Arbeitsweise besteht darin, zunächst alle Komponenten bis auf den Katalysator in einem statischen Mischer zu mischen und dann den Katalysator in Form einer Lösung in dieses Vorgemisch einzudosieren und darin mittels eines zweiten statischen Mischers homogen zu verteilen. Die Verweilzeit in dem zweiten statischen Mischer und in der Zuleitung zum Reaktor soll so kurz wie möglich sein. Durch geeignete Dimensionierung der Nennweiten bzw. des freien Durchgangs und den Längen lassen sich Verweilzeiten von wenigen als einer Sekunde ohne weiteres realisieren.

Eventuelle weitere Zusatzstoffe werden je nach Zweckmäßigkeit entweder ebenfalls bereits dem schmelzflüssigen Ausgangsmaterial zugesetzt oder direkt in den Reakton eindosiert.

Das im Reaktor vorgelegte pulverförmige bis körnige Polymerisat ist ein noch nicht chemisch nachbehandeltes Trioxanhomo- oder -copolymerisat, das möglichst wenig Bestandteile enthält, welche die Polymerisation negativ beeinflussen. Zur erstmaligen Inbetriebnahme des Reaktons kann man z.B. ein in Form von Blöcken polymerisiertes und dann auf eine Korngröße von etwa 1 bis 5 mm zerkleinertes Polymerisat einsetzen. Später wird dann zweckmäßigerweise ein aus einer früheren Kampagne stammendes und unter Stickstoff oder zumindest unter Ausschluß von Feuchtigkeit gelagertes Polymerisat vorgelegt.

Die nach dem erfindungsgemäßen Verfahren hergestellten Polymerisate können in erster Linie zur Herstellung von Formmassen verwendet werden. Die hierzu notwendige Aufarbeitung umfaßt das Neutralisieren des Katalysators, das Entfernen nicht umgesetzter Ausgangsstoffe die Stabilisierung der Kettenenden, beispielsweise durch Veresterung oder Veretherung oder durch selektiven Abbau bis zu stabilen primären Alkoholendgruppen und schließlich das Einarbeiten von chemischen Stabilisatoren und gegebenenfalls weiteren Zusatzstoffen. Übliche Aufarbeitungsmethoden sind beispielsweise in "Kunststoff-Handbuch" Band XI, Seiten 13 bis 18 und 21 bis 23, Carl Hanser Verlag, München 1971, beschrieben.

Die Erfindung wird durch die nachfolgenden Beispiele näher erläutert. Soweit nicht anders angegeben, bedeuten Prozentangaben Gewichtsprozente.

**Beispiel 1:**

3874 g Tridxan, 120 g 1,3-Dioxolan und 6 g Butylal werden in bekannter Weise mittels $BF_3$-Diethyletherat zu einem Block polymerisiert. Nach Vorzerkleinerung wird das Copolymerisat in einer Mühle mit 3 mm - Sieb gemahlen. 2500 g des körnigen Copolymerisats füllt man nun durch die Einfüllöffnung E in den in Abbildung 1 schematisch dargestellten Reaktor. Nach Schließen von E leitet man bei teilweise geöffnetem Schieber S Stickstoff durch den Reaktor, dessen Heizmantel mittels eines Thermostaten auf 90°C aufgeheizt wird. Der Reaktor hat folgende Maße: 125 mm Innendurchmesser und 500 mm Länge (innen). Er besitzt einen mit elf Mischelementen ausgestatteten Rotor, der in Abbildung 1 nur schematisch skizziert ist. Die Form und Anordnung der Mischelemente ist aus den Abbildungen 2.1 bis 2.3 ersichtlich. Das erste, vor dem Zulauf befindliche Mischelement (s. Abbildungen 2.1 und 2.2) hat die Maße a = 60 mm, b = 30 mm, c = 25 mm. Das letzte Mischelement ist spiegelbildlich zum ersten angeordnet, es besitzt die gleichen Abmessungen. Die restlichen Mischelemente haben die Form von Pflugscharen (s. Abbildungen 2.2 und 2.3) mit den Abmessungen a = 60 mm, b = 30 mm, c = 50 mm. Die Abstände zwischen den Schaufelspitzen betragen in der Projektion jeweils 50 mm. Aus den nachfolgend aufgeführten Winkeln α (s. Abbildung 2.2) geht hervor, welche Position die Mischelemente 2 bis 11 in dieser Reihenfolge, bezogen jeweils auf die Position des ersten Elementes einnehmen: 53°, 107°, 351°, 230° 289°, 351°, 51°, 261°, 292° und 325°. Zur Messung der Reaktorinnentemperatur si Thermoelemente unten (1 bis 10) und 9 oben (11 bis 19) angebracht. Die Thermoelemente haben einen Durchmesser von 1,0 mm und ragen ca. 0,3 mm in den Reaktorraum hinein. Gegen den Heizmantel sind sie mit Teflonhülsen von 3,0 mm Wandstärke isoliert. Der Füllstand im Reaktor wird durch Höhenverstellung des an der Austragsöffnung A angebrachten Schiebers S reguliert.

Etwa 2 Stunden nach Einschalten des Thermostaten zeigen die Thermoelemente 1 bis 19 ca. 90°C an. Eine Kontrollmessung mittels eines durch E in das Produkt eingeführten Thermometers ergibt 88,6°C, ein Hinweis darauf, daß die Anzeige der Thermoelemente 1 bis 19 trotz Wärmeisolierung noch vom Heizmantel beeinflußt wird. Während des Aufheizens stellt man auf die nachfolgend beschriebene Weise die Induktionszeit der Polymerisation ein. In einem kontinuierlich mit einer Rate von 4200 g/h fließenden, auf 70°C temperierten Strom eines Gemisches aus 96,85 % Trioxan, 3 % 1,3-Dioxolan und 0,15 % Butylal wird eine Lösung von $BF_3$-Diethyletherat in 1,2-Dichlorethan mit einer $BF_3$-Konzentration von 5,8 mg/ml kontinuierlich eindosiert und beim Durchströmen eines statischen Mischers homogen verteilt. Das katalysierte Monomerengemisch wird zur Bestimmung der Induktionszeit durch einen Teflonschlauch von 1,5 mm Nennweite in Weithalsgläschen von 28 mm Innendurchmesser geleitet, die in einem auf 90° C temperierten Aluminium-Heizblock stecken. Nun mißt man die Zeit vom Beginn des Einleitens bis zur gerade erkennbaren Eintrübung der Probe. Nach jeder Veränderung der Katalysatordosierung wird die Bestimmung wiederholt.

Durch allmähliches Erhöhen der Katalysator-Dosierung bis auf 24 ml/h, entsprechend 33 ppm $BF_3$ wird die Induktionszeit auf ca. 15 Sekunden eingestellt. Unmittelbar vor Beginn des eigentlichen Versuchs spritzt man 10 ml Katalysatorlösung in den Reaktor und verteilt sie im vorgelegten Polymerisat, damit ein zuverlässiges

Anspringen der Polymerisation gewährleistet ist. Hierauf wird der Teflonschlauch mit dem Reaktor verbunden und der auf 275 UpM eingestellte Rotorantrieb eingeschaltet. Der Schieber S wird so weit geöffnet, daß pro Minute ca. 60 g Produkt ausgetragen werden.

Das Anspringen der Polymerisation ist schon nach weniger als einer Minute am Temperaturanstieg an den Thermoelementen 4 und 5 erkennbar. Innerhalb von 30 bis 60 Minuten bildet sich eine gleichbleibende Temperaturverteilung aus, mit dem Maximum am Thermoelement 5 (93,3°C) bzw. 14 (91 9°C) und abfallenden Temperaturen zum Eiß- und Austrag hin. Die Temperaturen im Heizmantel betragen 90,0°C am Zulauf und 90,6°C am Ablauf.

Das ausgetragene körnige Produkt wird im Behälter B, den man etwa alle 30 Minuten entleert, aufgefangen und hierbei durch Begasen mit Ammoniak (1,5 l/h) inaktiviert. Es hat eine mittlere Korngröße von ca. 2 bis 3 mm. Nach 7 Stunden wird die Zufuhr des Monomerengemisches durch Lösen der Schlauchverbindung gestoppt und zwei Minuten später der Antrieb abgestellt. Hierauf entfernt man das Thermoelement 14 und führt durch den geöffneten Stutzen ein längeres Thermoelement bis in das körnige Polymerisat ein. Die Produkttemperatur beträgt 95,0°C. Zur Ausbeutebestimmung wird der Reaktor abgekühlt und nach Abflanschen des Deckels an der Austragsseite entleert. Die Masse des Reaktorinhalts hat um 140 g auf 2640 g zugenommen. Zusammen mit dem während des Versuchs entnommenen Produkt (27.378 g) ergibt sich eine Ausbeute von 27.518 g (93,6 %, bezogen auf eingesetztes Monomerengemisch).

Von dem Produkt, das zwischen 3 und 7 Stunden Versuchsdauer ausgetragen wurde, nimmt man 5000 g und vermischt sie in einem Fluidmischer mit 20 g Isophthalsäurediamid und 25 g N,N'-Hexamethylen-bis-3-(3',5'-di-tert.butyl-4'-hydroxyphenyl)-propionamid. Das Gemisch wird dann bei 235°C in einem Zweischneckenextruder homogenisiert und gleichzeitig entgast. Man erhält 4605 g stabiles Copolymerisat, das einen Schmelzindex 190/2,18 von 9,7 g/10 min besitzt und bei zweistündigem Erhitzen auf 220°C an der Luft nur 1,2 % seiner Masse verliert.

**Beispiel 2:**

Analog zum Beispiel 1 wird zunächst aus 3800 g Trioxan und 200 g 1,3-Dioxepan durch Katalyse mit t-Butylperchlorat ein Polymerblock hergestellt und zerkleinert. Man füllt dann 1500 g Mahlgut in den in Abbildung 3 schematisch dargestellten Reaktor, der nach Aufsetzen des Dekkels unter Durchleiten von Stickstoff auf 80°C temperiert wird. Das Röhrchen für die spätere Monomereinspeisung dient hierbei als Auslaß für den Stickstoffstrom.

Der Reaktor ist ein Fluidmischer mit zwei über Kreuz angeordneten, im Winkel von 45° angestellten Rührflügeln R und einem ankerförmigen Abstreifer R'. Er hat einen Innendurchmesser von 18 cm und eine Höhe von ebenfalls 18 cm (innen). sowohl der untere Teil als auch der Deckel des Reaktors sind mit einem Heizmantel ausgestattet. Das Monomere kann durch ein dünnes, durch die Hohlweile des Abstreifers durchgeführtes Röhrchen eingeleitet werden. Die Austragsöffnung A läßt sich mittels der Sektorscheibe S verschließen. Die Rührflügel werden direkt durch einen Getriebemotor, der Abstreifer indirekt über einen Zahnriemen angetrieben.

Nach etwa 2 Stunden wird die Stickstoffzuleitung vom Stutzen gelöst und ein Thermoelement eingeführt. Die Temperatur des Reaktorinhalts beträgt 78,4°C. Die Induktionszeit des mit t-Butylperchlorat initiierten, auf 80°C temperierten und kontinuierlich mit einer Rate von 4500 ml/h geförderten Gemisches aus 95 % Trioxan und 5 % 1,3-Dioxepan wird vorher auf die im Beispiel 1 angegebene Weise bestimmt (wobei man den Aluminium-Heizblock jedoch auf 80°C statt 90°C temperiert) und auf 20 Sekunden eingestellt. Hierzu ist eine Förderleistung von 11,3 ml/h Katalysatorlösung, die 0,2 mg t-Butylperchlorat enthält, notwendig. Als Lösungsmittel für den Katalysator dient ein Gemisch aus 95 % 1,2-Dichlorethan und 5 % 1,2-Dimethoxyethan.

Unmittelbar vor Beginn des eigentlichen Versuchs spritzt man 10 ml Katalysatorlösung in den Reaktor und verteilt sie im vorgelegten Polymerisat, damit ein zuverlässiges Anspringen der Polymerisation gewährleistet ist. Hierauf verbindet man die Monomerleitung mit dem Reaktor und setzt gleichzeitig den Doppelrührer sowie den Abstreifer in Gang, deren Drehzahlen man auf 760 bzw. 25 UpM einstellt. Alle 3 Minuten werden durch kurzzeitiges Verdrehen der Sektorscheibe S etwa 220 bis 230 g Produkt abgelassen. Nach zwei Stunden wird die Monomerzufuhr unterbrochen und eine Minute später der Antrieb für Doppelrührer und Abstreifer abgestellt. Das Polymerisat im Reaktor (1425 g) hat eine Temperatur von 83,6°C

Während des Versuchs sind insgesamt 8994 g Produkt abgelassen worden. Unter Berücksichtigung der zu viel entnommenen 75 g ergibt sich eine Ausbeute von 8919 g (99,1 %, bezogen auf eingesetztes Monomerengemisch). Das Versuchsprodukt hat eine mittlere Korngröße von 4 bis 5 mm. Zur Bestimmung des extrahierbaren Anteils werden 50 g fein gemahlen und mit 500 ml Methanol eine Stunde unter Rückfluß erhitzt. Der Extraktionsverlust beträgt 8,2 %.

**Patentansprüche**

1. Verfahren zur kontinuierlichen Polymerisation von Trioxan für sich alleine oder zusammen mit mit Trioxan copolymerisierbaren Verbindungen in Gegenwart eines kationisch wirksamen Katalysators, dadurch

gekennzeichnet, daß man das zu polymerisierende Ausgangsmaterial in flüssiger Form kontinuierlich in einen als Reaktor dienenden Mischer einspeist, in welchem bei einer oberhalb der kritischen Drehzahl liegenden Drehzahl pulverförmiges bis körniges Oxymethylen-(Co)polymerisat zu einem stabilen Wirbelbett verwirbelt wird, die Einspeisungsgeschwindigkeit des zu polymerisierenden Ausgangsmaterials so einstellt, daß pro Minute 0,5 bis 10 Gewichtsprozent, bezogen auf den gesamten Reaktorinhalt, zugeführt werden, die Katalysatorkonzentration so wählt, daß eine Verfestigung des flüssigen Ausgangsmaterials innerhalb von 20 bis 50 Sekunden nach der Katalysatorzugabe eintritt, die Temperatur des Reaktorinhalts im Bereich zwischen 60 und 125°C hält und nach einem Polymerisationsumsatz von mindestens 70 prozent kontinuierlich oder taktweise Polymerisat aus dem Reaktor austrägt.

2. Verfahren nach Anspruch 1, dadurch gekennzeichnet, daß man das flüssige Ausgangsmaterial mit einer Temperatur zwischen 80 und 110°C einspeist.

3. Verfahren nach Anspruch 1 oder 2, dadurch gekennzeichnet, daß man das flüssige Ausgangsmaterial mit einer Temperatur zwischen 65 und 75°C einspeist.

4. Verfahren nach einem der Ansprüche 1 bis 3, dadurch gekennzeichnet, daß man die Temperatur des Reaktorinhalts im Bereich zwischen 75 und 100°C hält.

## Claims

1. A process for the continuous polymerization of trioxane, alone or together with compounds which are compolymerizable with trioxane, in the presence of a cationically active catalyst, characterised in that the starting material to be polymerized is continuously fed in liquid form into a mixer acting as reactor, in which pulverulent to granular oxymethylene-(co)polymer is spun to a stable fluidized bed at a speed of rotation above the critical speed of rotation, the speed of feeding-in of the starting material to be polymerized is regulated such that from 0.5 to 10% by weight, based on the total reactor contents, are added per minute, the catalyst concentration is selected such that solidification of the liquid starting material occurs within from 20 to 50 seconds after the addition of catalyst, the temperature of the reactor contents is kept in a range from 60 to 125°C,and after a polymer conversion of at least 70%, polymer is continuously or periodically removed from the reactor.

2. A process according to claim 1, characterised in that the liquid starting material is fed in at a temperature from 60 to 110°C.

3. A process according to claim 1 or 2, characterised in that the liquid starting material is fed in at a temperature from 65 to 75°C.

4. A process according to one of claims 1 to 3, characterised in that the temperature of the reactor contents is maintained in a rangc from 75 to 100°C.

## Revendication

1°) Procédé pour la polymérisation en continu de trioxanne seul ou conjointement avec des composés copolymérisables avec la trioxanne, en présence d'un catalyseur actif cationique, caractérisé par le fait que l'on introduit en continu le produit de départ à polymériser sous forme liquide, dans un mélangeur servant de réacteur dans lequel on fait tourbilloner, à une vitesse de rotation supérieure à la vitesse de rotation critique du (co)polymère d'oxyméthylène du pulvérulent au granulaire en un lit fluidisé stable, que la vitesse d'introduction du produit de départ à polymériser est réglée de telle manière que 0,5 à 10 % en poids, rapporté au contenu total du réacteur, sont introduits par minute, que l'on choisit la concentration du catalyseur de façon qu'une solidification du produit liquide de départ apparaisse en l'espace de 20 à 50 secondes après l'addition du catalyseur, que la température du contenu du réacteur est maintenue dans l'intervalle compris entre 60 et 125°C, qu'après un degré de polymérisation d'au moins 70 %, du polymère est retiré du réacteur en continu ou périodoquement.

2°) Procédé selon la revendication 1, caractérisé par le fait que l'on introduit le produit de départ liquide ayant une température comprise entre 60 et 110°C.

3°) Procédé selon la revendication 1 ou 2,caractérié par le fait que l'on introduit le produit de départ liquide ayant une température comprise enter 65 et 75°C.

4°) Procédé selon les revendications 1 à 3, caractérisé par le fait que l'on maintient la température du contenu du réacteur dans l'intervalla compris entre 75 et 100°C.

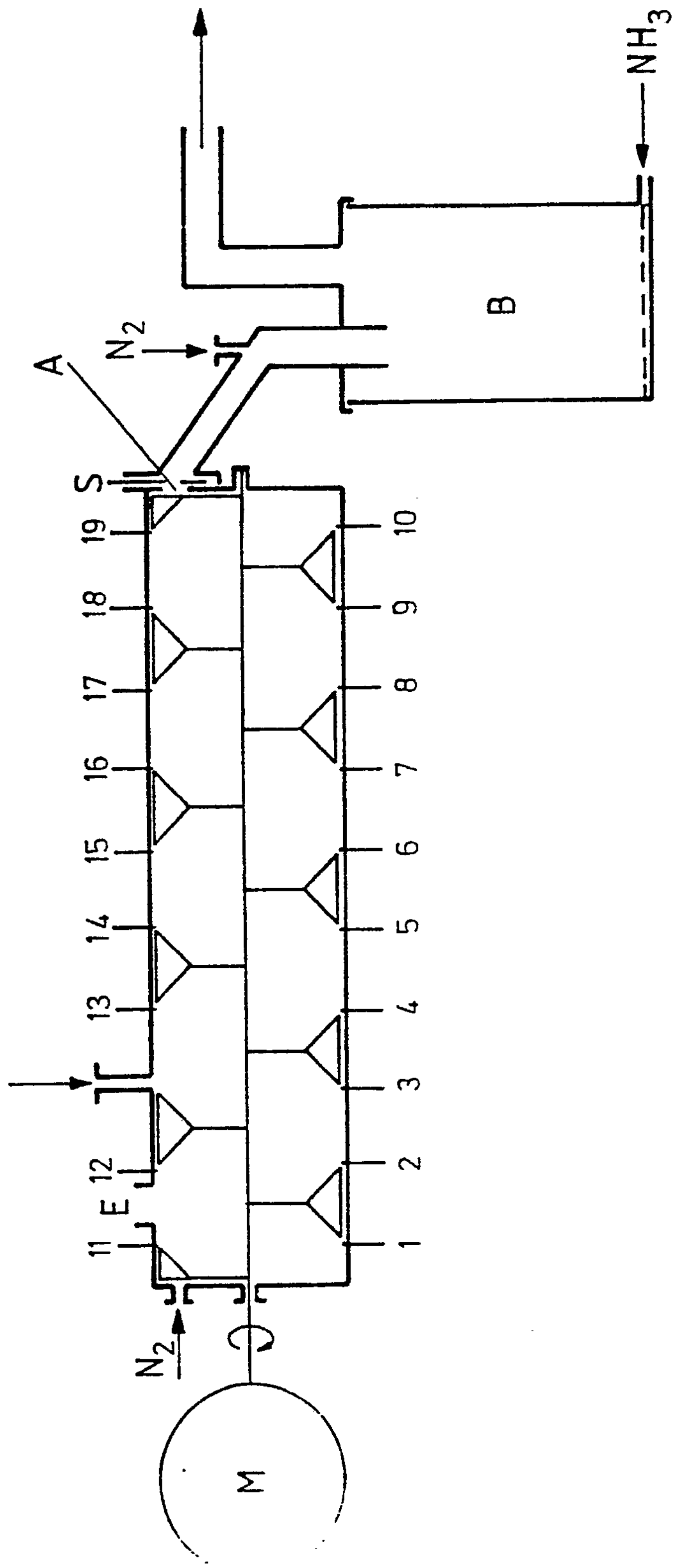


Fig. 1

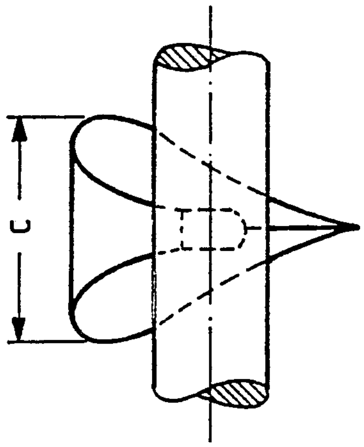


Fig. 2.3

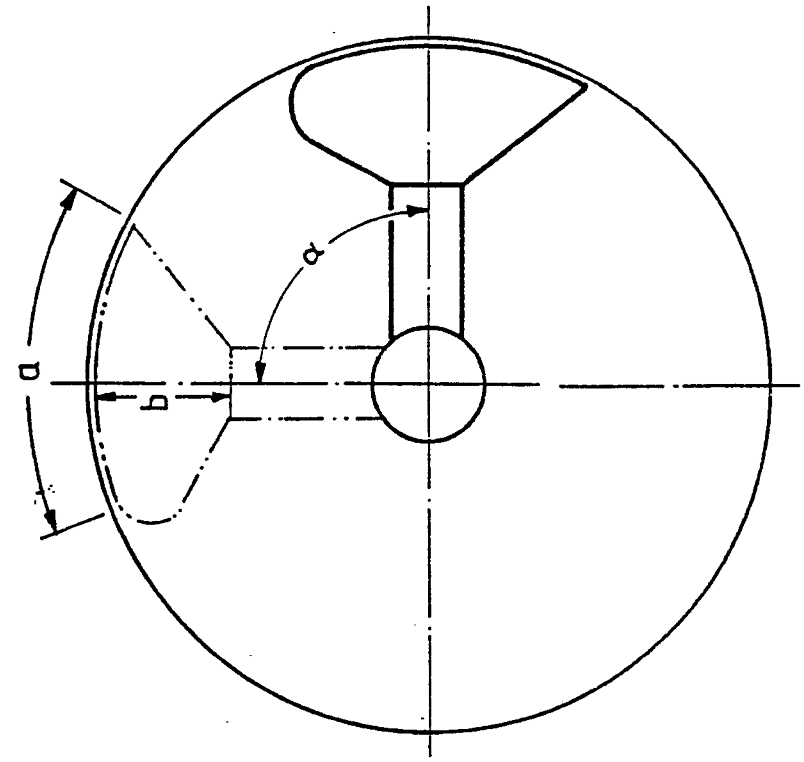


Fig. 2.2

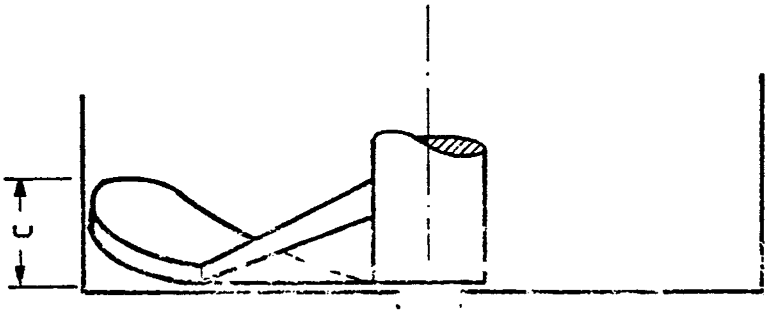


Fig. 2.1

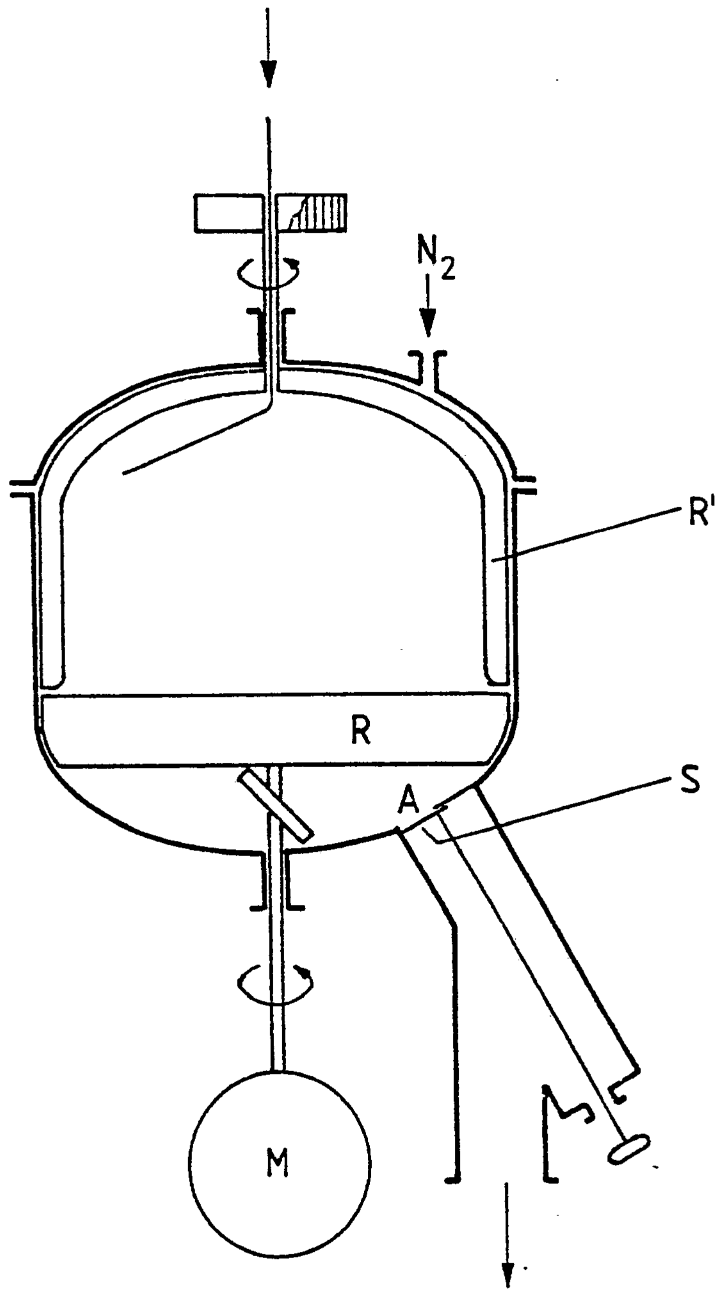


Fig. 3